# EUROPÄISCHE PATENTANMELDUNG

(11) **EP 2 375 097 A1**
(43) Veröffentlichungstag der Anmeldung: **12.10.2011**
(21) Anmeldenummer: 11161417.8
(22) Anmeldetag: 07.04.2011
(51) Int. Cl.: F16F 1/38, B60G 7/02

(54) **Verfahren zur Verbindung eines Gummilagers oder eines Gummi-Metall-Lagers mit einer Lageraufnahmes sowie Fahrwerkslager**

(30) Priorität: 08.04.2010 DE 102010014257
(71) Anmelder: Benteler Automobiltechnik GmbH, 33102 Paderborn (DE)
(72) Erfinder: Koczar, Peter, 65205, Wiesbaden (DE)
(74) Vertreter: Griepenstroh, Jörg

(57) **Zusammenfassung**

Verfahren zur Verbindung eines Gummilagers oder eines Gummi-Metall-Lagers (3) mit einer Lageraufnahme (2) eines Fahrwerks!agers (1), bei welchem das Gummilager oder das Gummi-Metall-Lager (3) in die Lageraufnahme (2) eingepreßt wird, wobei nach dem Einpressen das Gummilager oder das Gummi-Metall-Lager (3) mit der Lageraufnahme (2) verklebt, sowie ein Fahrwerkslager (1) umfassend ein in eine Lageraufnahme (2) eingepresstes Gummilager oder Gummi-Metall-Lager (3), wobei das Gummilager oder das Gummi-Metall-Lager (3) mit der Lageraufnahme (2) durch Klebung verbunden ist.

## Beschreibung

Die Erfindung betrifft ein Verfahren zur Verbindung eines Gummilagers oder eines Gummi-Metall-Lagers mit einer Lageraufnahme eines Fahrwerkslagers mit den Merkmalen im Oberbegriff von Patentanspruch 1 sowie ein Fahrwerkslager mit den Merkmalen im Oberbegriff von Patentanspruch 6.

Fahrwerkslager werden zur Führungs- und Isolierungsfunktion eines Fahrwerks eines Kraftfahrzeugs eingesetzt. Hierzu werden Fahrwerkslager in Achssystemen und Fahrwerkslenker als elastische Gelenke montiert. In der Regel handelt es sich hierbei um koaxial angeordnete, beschichtete Gummi-Metall-Lager mit einem metallischen Lagerkern. Der Lagerkern wird mit dem Fahrwerk verschraubt. Mindestens eine Gummi- bzw. Elastomerschicht ist an den Lagerkern anvulkanisiert, Das so hergestellte Gummi-Metall-Lager wird in eine Lageraufnahme beispielsweise eines Lenkers des Fahrwerks unter elastischer Vorspannung der Gummischicht eingepresst. Darüber hinaus zählt es zum Stand der Technik, zur Verbesserung des Ansprechverhaltens und der Akkustik mehrlagige Gummi-Metall-Lager zu verwenden, bei welchen zwischen den Elastomerschichten Metalllagen angeordnet sind.

Nachteilig an den bekannten Fahrwerkslagern ist, dass nach dem Einpressen des Gummi-Metall-Lagers in die Lageraufnahme Relativbewegungen zur Lageraufnahme auftreten können, wodurch wiederum unerwünschte Reibung und Dämpfung erzeugt wird. Zudem erhöht sich der Verschleiß des Fahrwerkslagers.

Ausgehend von diesem Stand der Technik liegt der Erfindung die Aufgabe zugrunde, ein Verfahren zur Herstellung eines Fahrwerkslagers aufzuzeigen, mit welchem Relativbewegungen zwischen einem Gummilager oder einem Gummi-Metall-Lager und einer Lageraufnahme vermieden werden können, sowie ein Fahrwerkslager aufzuzeigen, bei welchem keine Relativbewegungen zwischen Gummilager oder dem Gummi-Metall-Lager und der Lageraufnahme auftreten.

Der verfahrensmäßige Teil der Aufgabe wird durch ein Verfahren mit den Maßnahmen des Patentanspruchs 1 gelöst

Vorteilhafte Maßnahmen und Merkmale der Erfindung sind Gegenstand der Unteransprüche.

Bei dem erfindungsgemäßen Verfahren zur Verbindung eines Gummilagers oder eines Gummi-Metall-Lagers mit einer Lageraufnahme eines Fahrwerkslagers wird das Gummi-Metall-Lager in die Lageraufnahme eingepresst. Dabei wird die an die Lageraufnahme grenzende Gummischicht komprimiert. Auf eine zum Gummilager oder zum Gummi-Metall-Lager weisende Fläche der Lageraufnahme und/oder auf eine zur Lageraufnahme weisende Fläche der Gummischicht wird ein Klebstoff aufgebracht, so dass nach dem Einpressen das Gummilager oder das Gummi-Metall-Lager mit der Lageraufnahme verklebt und somit stoffschlüssig mit dieser verbunden ist.

Der Klebstoff wird vorzugsweise vor dem Einpressen des Gummilagers oder des Gummi-Metall-Lagers auf die Fläche der Lageraufnahme oder/und die Fläche des Gummilagers oder des Gummi-Metall-Lagers appliziert. Ebenso ist es möglich, den Klebstoff während des Einpressens des Gummilagers oder des Gummi-Metall-Lagers in die Lageraufnahme auf die jeweiligen Flächen aufzubringen. Der Klebstoff wird insbesondere vollflächig aufgebracht. Als Gummilager oder Gummi-Metall-Lager im Sinne der Erfindung ist derjenige Lagerteil zu verstehen, der in die Lageraufnahme eingespresst wird. Durch das Einpressen des Gummilagers oder des Gummi_{~}Metall-Lagers in die Lageraufnahme wird in einem Fügebereich eine gleichmäßige Flächenpressung erzielt. Dadurch wird gewährleistet, dass die Lageraufnahme mit dem Gummilager oder dem Gummi-Metall-Lager gleichmäßig über den Fügebereich verklebt.

Reine Gummilager sind vorzugsweise schlauchartig ausgeführt und werden durch das erfindungsgemäße Verkleben mit einem Metallbauteil beispielsweise einer Lageraufnahme verbunden.

Werden Gummi-Metall-Lager mit mehreren Gummischichten eingesetzt, so kann auch ein Lagerkern mit diesem Verfahren mit einer innenliegenden Gummischicht des Gummi-Metall-Lagers durch Verkleben stoffschlüssig verbunden werden. Dabei wird der Klebstoff auf eine äußere Umfangsfläche des Lagerkerns und/oder auf eine zum Lagerkern weisende Fläche einer innenliegenden Gummischicht aufgebracht. Auch hier gewährleistet das Einpressen des Lagerkerns ein vollflächiges Anliegen der Gummischicht an den Lagerkern und somit ein gleichmäßiges Verkleben des Lagerkerns mit der innenliegenden Gummischicht.

Der verwendete Klebstoff kann beispielsweise zu der Gruppe der Kontaktklebstoffe, der Acrylatklebstoffe oder der Epoxidharz-Klebstoffe gehören. Vorzugsweise kann auch ein Kautschukkleber eingesetzt werden.

Durch das Verkleben der Lageraufnahme mit einem Gummilager oder einem ein- oder mehrlagigen Gummi-Metall-Lager wird eine stoffschlüssige Verbindung erzeugt, die verhindert, dass im Kontaktbereich zwischen dem Gummilager oder dem Gummi-Metall-Lager und der Lageraufnahme eine Relativbewegung auftritt. Durch das Einpressen des Gummilagers oder des Gummi-Metall-Lagers wird zudem eine gleichmäßige Flächenpressung zwischen der Lageraufnahme und dem Gummilager oder dem Gummi-Metall-Lager realisiert. Das wiederum wirkt sich vorteilhaft auf die Gleichmäßigkeit der Klebeverbindung aus.

Der gegenständliche Teil der Aufgabe wird durch ein Fahrwerkslager mit den Merkmalen von Patentanspruch 6 gelöst.

Das erfindungsgemäße Fahrwerkslager umfasst ein in eine Lageraufnahme eingepresstes Gummilager oder Gummi-Metall-Lager. Dabei ist das Gummilager oder das Gummi-Metall-Lager mit der Lageraufnahme durch eine Klebung stoffschlüssig verbunden. Durch die so erzeugte stoffschlüssige Verbindung zwischen der Lageraufnahme und dem Gummilager oder dem Gummi-Metall-Lager wird einer Relativbewegung im Kontaktbereich des Gummilagers oder des Gummi-Metall-Lagers zur Lageraufnahme vorgebeugt.

Darüber hinaus kann beim Einsatz eines Gummi-Metall-Lagers mit mehreren Gummischichten eine innenliegende Gummischicht mit einem Lagerkern ebenfalls mittels Verkleben verbunden sein. Auch hier wird der Lagerkern in das Gummi-Metall-Lager eingepresst, wodurch die innenliegende Gummischicht komprimiert und somit eine gleichmäßige Flächenpressung zwischen der Gummischicht und dem Lagerkern besteht, welche wiederum eine gleichmäßige Klebung im Fügebereich bewirkt.

Durch Einkleben des Gummilagers oder des Gummi-Metall-Lagers in die Lageraufnahme ist es denkbar, auch Lageraufnahmen mit Geometrien einzusetzen, welche von der kreisrunden Rohrform abweichen, so dass das Gummilager oder das Gummi-Metall-Lager mit seiner Umfangsfläche nicht vollständig an einer von der Lageraufnahme zum Gummilager oder zum G_{L}immi-Metall-Lager weisenden Fläche anliegt. Wichtig hierbei ist nur, dass genügend Klebefläche vorhanden ist, um eine ausreichende Haftung zwischen dem Gummilager oder dem Gummi-Metall-Lager und der Lageraufnahme zu gewährleisten.

Die Erfindung ist nachfolgend anhand von zwei in den Figuren schematisch dargestellten Ausführungsbeispielen näher beschrieben. Es zeigen:
- Figur 1: ein einfaches Gummi-Metall-Lager in einer Lageraufnahme und
- Figur 2: ein Gummi-Metall-Lager mit einer Zwischenlage,

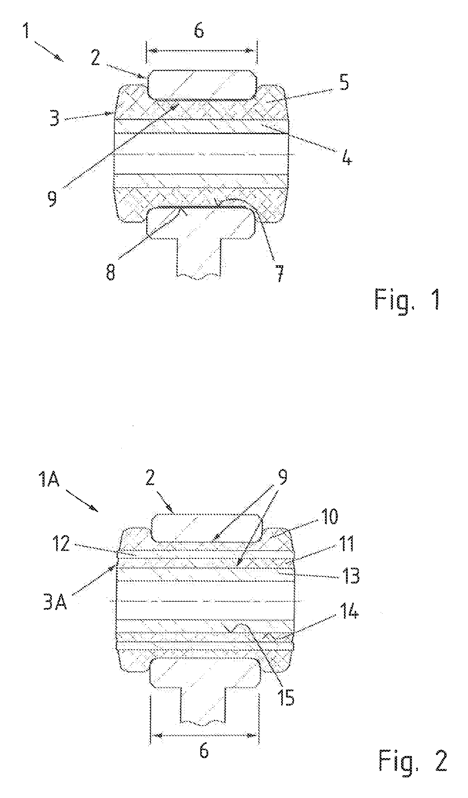

Figur 1 zeigt ein Fahrwerkslager 1 umfassend eine Lageraufnahme 2 sowie ein Gummi-Metall-Lager 3. Dieses Gummi-Metall_{~}Lager 3 weist einen Lagerkern 4 sowie eine Gummischicht 5 auf. Dabei ist das Gummi-Metall-Lager 3 in die Lageraufnahme 2 eingepresst. Das bedeutet, dass in einem Fügebereich 6 zwischen Lageraufnahme 2 und Gummi-Metall-Lager 3 die Gummischicht 5 komprimiert ist, wodurch eine gleichmäßige Flächenpressung zwischen Lageraufnahme 2 und dem Gumimi-Metall-Lager 3 gewährleistet ist. lm Fügebereich 6 besteht zwischen Lageraufnahme 2 und Gummi-Metall-Lager 3 eine mittels einer Klebung realisierte stoffschlüssige Verbindung.

Die Klebung wird dadurch erzeugt, dass auf eine zum Gummi-Metall-Lager 3 weisende Fläche 7 der Lageraufnahme 2 und/oder auf eine zur Lageraufnahme 2 weisende Fläche 8 der Gummischicht 5 ein Klebstoff 9 aufgebracht wird, mittels welchem die Lageraufnahme 2 und das Gummi-Metall-Lager 3 nach dem Einpressen verkleben.

Die Klebung wirkt einer möglichen Relativbewegung des Gummi-Metall-Lagers 3 relativ zur Lageraufnahme 2 während des Betriebs des Fahrwerklagers 1 entgegen.

In Figur 2 ist ebenfalls ein Fahrwerkslager 1A dargestellt mit einem in eine Lageraufnahme 2 eingepressten mehrlagigen Gummi-Metall-Lager 3A, welches zwei Gummischichten 10, 11 aufweist. Diese Gummischichten 10, 11 sind bei dieser Ausführung über eine metallische Zwischenlage 12 voneinander getrennt. Auch hier ist das Gummi-Metall-Lager 3A in die Lageraufnahme 2 eingepresst und mit dieser im Fügebereich 6 verklebt.

Darüber hinaus ist der Lagerkern 13 des mehrlagigen Gummi-Metall-Lagers 3A mit einer Gummischicht 11 des Gummi-Metall-Lagers 3A ebenfalls durch Kleben stoffschlüssig verbunden. Hierzu wird der Klebstoff 9 auch auf eine äußere Umfangsfläche 14 des Lagerkerns 13 und/oder auf eine zum Lagerkern 13 weisende Fläche 15 der inneren Gummischicht 11 aufgebracht, so dass der Lagerkern 13 nach dem Einpressen mit der Gummischicht 11 des mehrlagigen Gummi-Metall-Lagers 3A verklebt.

### Bezugszeichen:

- 1 -: Fahrwerkslager
- 1A -: Fahrwerkslager
- 2 -: Lageraufnahme
- 3 -: Gummi-Metall-Lager
- 3A -: Gummi-Metall-Lager
- 4 -: Lagerkern
- 5 -: Gummischicht
- 6 -: Fügebereich
- 7 -: Fläche
- 8 -: Fläche
- 9 -: Klebstoff
- 10 -: Gummischicht
- 11 -: Gummischicht
- 12 -: Zwischenlage
- 13 -: Lagerkern
- 14 -: Umfangsfläche
- 15 -: Fläche

## Patentansprüche

1. Verfahren zur Verbindung eines Gummilagers oder eines Gummi-Metall-Lagers (3, 3A) mit einer Lageraufnahme (2) eines Fahrwerkslagers (1), bei welchem das Gummilager oder das Gummi-Metall-Lager (3, 3A) in die Lageraufnahme (2) eingepresst wird, **dadurch gekennzeichnet, dass** ein Klebstoff (9) auf eine zum Gummilager oder zum Gummi-Metall-Lager (3, 3A) weisende Fläche (7) der Lageraufnahme (2) und/oder auf eine zur Lageraufnahme (2) weisende Fläche (8) des Gummilagers oder des Gummi-Metall-Lagers (3, 3A) aufgebracht wird, so dass nach dem Einpressen das Gummilager oder das Gummi-Metall-Lager (3, 3A) mit der Lageraufnahme (2) verklebt.

2. Verfahren nach Anspruch 1, **dadurch gekennzeichnet, dass** der Klebstoff (9) vor dem Einpressen des Gummilagers oder des Gummi-Metall-Lagers (3, 3A) aufgebracht wird.

3. Verfahren nach Anspruch 1 oder 2, **dadurch gekennzeichnet, dass** der Klebstoff (9) während des Einpressens des Gummilagers oder des Gummi-Metall-Lagers (3, 3A) in die Lageraufnahme (2) appliziert wird.

4. Verfahren nach einem der Ansprüche 1 bis 3, **dadurch gekennzeichnet, dass** ein Lagerkern (4, 13) mit dem Gummilager oder mit einer Gummischicht (5, 11) des Gummi_{~}Metall-Lagers (3, 3A) verklebt wird.

5. Verfahren nach einem der Ansprüche 1 bis 4, **dadurch gekennzeichnet, dass** als Klebstoff (9) ein Kontaktkleber, ein Acrylatkleber oder ein Epoxidharz-Klebstoff eingesetzt wird.

6. Fahrwerkslager, umfassend ein in eine Lageraufnahme (2) eingepresstes Gummilager oder Gummi-Metall-Lager (3, 3A), **dadurch gekennzeichnet, dass** das Gummilager oder das Gummi-Metall-Lager (3, 3A) mit der Lageraufnahme (2) durch eine Klebung verbunden ist,

7. Fahrwerkslager nach Anspruch 6, **dadurch gekennzeichnet, dass** ein Lagerkern (4, 13) mit dem Gummilager oder mit einer Gummischicht (5, 11) des Gummi-Metall-Lagers (3, 3A) verklebt ist,

8. Fahrwerkslager nach Anspruch 6 oder 7, **dadurch gekennzeichnet, dass** die Lageraufnahme eine von einer Kreisform abweichende Geometrie aufweist.

9. Fahrwerkslager nach einem der Ansprüche 6 bis 8, **dadurch gekennzeichnet, dass** das Gummi-Metall-Lager (3A) mehrere Gummischichten (10, 11) aufweist, welche durch eine Zwischenlage (12) voneinander getrennt sind.
